# EUROPEAN PATENT APPLICATION

(11) **EP 3 835 372 A1**
(43) Date of publication of application: **16.06.2021**
(21) Application number: 19380033.1
(22) Date of filing: 11.12.2019
(51) Int. Cl.: C09D 7/40, F03D 1/06, F01D 5/28

(54) **PROTECTIVE COATING SUITABLE FOR A WIND TURBINE BLADE, METHOD FOR PRODUCING THE SAME AND WIND TURBINE BLADE**

(71) Applicant: SIEMENS GAMESA RENEWABLE ENERGY INNOVATION & TECHNOLOGY, S.L., 31621 Sarriguren (Navarra) (ES)
(72) Inventor: Sanz Solana, Vicente, 46007 Valenica (ES); Bautista Rabanal, Yolanda, 12004 Castellón (ES); Belda Peña, Adriana, 46530 Puçol (Valencia) (ES); Muñoz Babiano, Almudena, 28701 Madrid (ES); Gonzalez Garcia, Gemma, 31621 Sarriguren (Navarra) (ES)
(74) Representative: Aspacher, Karl-Georg

(57) **Abstract**

A protective coating suitable for a wind turbine blade is described, the protective coating comprising a thermoset polymer and a fibrous macromolecule, wherein at least part of the thermoset polymer is bonded to the at least part of the fibrous macromolecule via chemical bonds. In addition, a protective coating suitable for a wind turbine blade is described, the protective coating being obtainable by a reaction between a polymer precursor having a first functional group and a fibrous macromolecule having a second functional group, such that chemical bonds between the first and the second functional groups are formed, as well as a method for producing the same and a wind turbine blade comprising the same.

## Description

### Field of invention

The present invention relates to the field of wind turbine blades, in particular to a protective coating suitable for a wind turbine blade and a method for producing the same.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades. The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

The aerodynamic characteristics of the wind turbine blades are essential to the performance of a wind turbine. In particular, a change of the surface roughness of a wind turbine blade may result in a modification of the aerodynamic behavior of the blade leading to a significant decrease in the wind turbine's performance. The main reasons for a surface roughness change are considered to involve surface erosion of the blades and/or material deposition on the blade surface.

During operation, wind turbine blades are typically exposed to a continuous impact of airborne particles and water rain at high speed. This impact may cause surface erosion of the blades, resulting in a loss of aerodynamics and, therefore, of the wind turbine's performance. The areas of the blade where most erosion occurs are located at the leading edge and at the end of the blade where the highest impact speed are achieved.

Previous attempts to cope with surface erosion of wind turbine blades include the following:
WO 2017/114528 A1 describes the moulding of a so-called erosion-resistant coating consisting of four successively applied layers which are then glued to the surface of the blade. The first and innermost layer consists of a fiber-reinforced polymer that can be glass, metal, aramid, carbon or blends that will serve to give consistency to the molded part. The successive applied layers are made of polymer without any reinforcement charges. These fibers are incorporated in the form of a fabric to provide cohesion to the molded part. This is, therefore, a construction solution that does not change the polymeric material of the coating and, as the fabric is in the inner layer, does not significantly affect the erosion of the outer layers. In addition, this approach suffers from difficulties of handling parts of up to 5 metres in length when repairing the blade in place and achieving a perfect fit to the shape of the blade to ensure subsequent adhesion of the blade.

WO 2017/198267 A1 describes a method to protect the blades of wind turbines from erosion based on obtaining thicker coatings than usual. To this end, it is suggested applying a first coat of paint on the blade, then applying a layer of fibrous material on the paint in the form of fabric with ordered or disordered fibers that can be fiberglass, polyester, kevlar or nylon. Afterwards, another coat of paint may be applied to the fabric to impregnate it. The use of the fabric layer allows thicker thicknesses to be obtained without paint sagging. This is also a constructive solution without involving a change in the material that forms the top coating. This approach has the disadvantage of conditioning the improvement in erosion resistance on an increase in the weight of the blade, which has the effect of reducing the performance of the wind turbine.

US 2017/0058863 A1 describes a part to be coupled to the leading edge of the blades of a wind turbine. This piece is welded to the blade using thermoplastic resin. This leading-edge cap is manufactured as a fibre-oriented fibre-reinforced composite material surrounded by a thermoplastic resin and achieves erosion resistance by incorporating an additive into the composite that may be of a different nature. This piece is designed to provide greater structural integrity and erosion resistance. In order to be moulded, this patent uses a thermoplastic whose properties are improved by the use of dispersed charges with which it does not form chemical bonds with the matrix. This approach suffers from the disadvantage of the difficulty of repairing the blade on site.

EP 2927482 A1 describes the use of a protective shield against erosion consisting of two layers, an inner layer of aramid fibre embedded in a polyurethane matrix and an outer layer of a UV-resistant coating. This approach has the disadvantage that the outer layer is UV resistant, but it is not reinforced against erosion and could be quickly eroded, increasing the roughness of the surface and reducing the annual energy production (AEP)of the blade.

Another reason for a change in surface roughness of wind turbine blades is the deposition of material on the blade surface. In fact, the aerodynamic profile of a wind turbine blade may be very sensitive to material deposition on its surface. Wind turbines installed in dirty outdoor locations or different location near to the sea or to different conventional plants may accumulate soil on blade surfaces reducing the annual energy production (AEP). The nature of soiling may be different from site to site. For example, emplacements near urban areas are typically exposed to airborne particles from coal-fired or vehicle emissions while agricultural locations in a northern climate may rather be exposed to wind-blown spores that might grow on the surface of the blades.

Previous attempts to cope with material deposition on a wind turbine blade surface include the following:
US 2012/114482 A1 describes an operation method to eliminate insects embedded in the blade surface by ejecting gas through an aperture designed in the blade surface. This approach has the disadvantage that it does not prevent the formation of fouling, but rather it is an a posteriori method.

WO 2018/130615 A1 describes a hydrophobic and an icephobic coating obtained by cold gas spray technique and a subsequent thermomechanical treatment in autoclave. The obtained coating presents good wear and antifouling resistance in addition to the icephobic behaviour. However, this dense coating solution has the disadvantage of increasing significantly the weight of the blade and consequently decreasing the AEP. In addition, the autoclave process makes this approach difficult to implement industrially for large blades with greater erosion problems.

Thus, there may be still a need for avoiding or at least reducing modifications of the aerodynamic behavior of a wind turbine blade due to changes of the surface roughness thereof. In particular, it may be desired to avoid or at least reduce surface erosion of wind turbine blades, thereby improving annual energy production (AEP) and increasing the time intervals for wind turbine maintenance stops (i.e. reducing maintenance efforts). It may also be desired to avoid or at least reduce the deposition of unwanted material on wind turbine blades that can modify the aerodynamic profile.

### Summary of the Invention

This need may be met by the subject matter according to the independent claims. Advantageous embodiments of the present invention are described by the dependent claims.

According to an aspect of the invention, there is provided a protective coating suitable for a wind turbine blade, the protective coating comprising a thermoset polymer and a fibrous macromolecule, wherein at least part of the thermoset polymer is bonded to at least part of the fibrous macromolecule via chemical bonds.

According to a further aspect of the invention, there is provided a protective coating suitable for a wind turbine blade, the protective coating being obtainable by a reaction between a polymer precursor having a first functional group and a fibrous macromolecule having a second functional group, such that chemical bonds between the first and the second functional groups are formed.

These aspects of the invention are based on the idea that a surface erosion of the wind turbine blades may be avoided or at least reduced by the application of a protective coating based on a combination of a thermoset polymer network and flexible fibrous macromolecules. The fibrous macromolecules (such as organic short fibers) are designed to obtain strong chemical, in particular covalent, bonds with the thermoset polymer so as to yield a copolymer material or graft-type material (more specifically, a thermoset polymer main chain grafted with fibrous macromolecules as side chains). Without wishing to be bound to any theory, the present inventors assume that by bonding (grafting) the fibrous macromolecules at the thermoset polymer network via chemical bonds (in particular covalent bonds), a protective coating may be provided with unprecedented integrity significantly improving the resistance to surface erosion.

According to a preferred embodiment of the invention, the protective coating may further comprise at least one of a surfactant (such that a surface energy of the protective coating may be controlled within a range of from 20 to 35 mN/m), a biocidal additive and/or a photocatalytic additive. By taking any of these measures (either alone or in combination), the deposition of material on the wind turbine blade may be avoided or at least drastically reduced. Without wishing to be bound to any theory, the present inventors assume that controlling the coating surface tension in the range 20-35 mN/m (for instance by means of a surfactant) significantly reduces the adhesion force of the fouling. In addition, the presence of biocides in the coating formulation may prevent the growth and colonization of microorganisms. Still further, organic material on the surface may be decomposed by a photocatalytic additive, i.e. by a photocatalytic reaction.

According to a still further aspect of the invention, there is provided a method of producing a protective coating suitable for a wind turbine blade, the method comprising providing a composition comprising a polymer precursor having a first functional group and a fibrous macromolecule having a second functional group, and reacting the first functional group of the polymer precursor with the second functional group of the fibrous macromolecule, such that chemical bonds between the first and the second functional groups are formed.

According to a yet further aspect of the invention, there is provided a wind turbine blade comprising a blade substrate and a protective coating as set forth herein and/or as obtained by a method of producing a protective coating as set forth herein.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a protective coating may be combined with any other exemplary embodiment of a protective coating and with any exemplary embodiment of a method for producing a protective coating and with any exemplary embodiment of a wind turbine blade and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a protective coating suitable for a wind turbine blade comprises (a network of) a thermoset polymer (resin) and a fibrous macromolecule, wherein at least part of the thermoset polymer is bonded to at least part of the fibrous macromolecule via (by means of) chemical bonds (in particular covalent bonds).

In an embodiment, the protective coating may comprise a network of a thermoset polymer or resin and a fibrous macromolecule, wherein at least part of the fibrous macromolecules are grafted (as side chains) to a main chain made of a thermoset polymer.

In further aspect, a protective coating suitable for a wind turbine blade is obtainable by a reaction between a polymer precursor (such as monomer and/or oligomer) having a first functional group and a fibrous macromolecule having a second functional group (capable of reacting with the first functional group), such that chemical bonds (in particular covalent bonds) between the first and the second functional groups are formed (generated). As a result of the reaction, a network of a thermoset polymer or resin and a fibrous macromolecule may be obtained, wherein at least part of the fibrous macromolecules are grafted (as side chains) to a main chain made of a thermoset polymer.

In the context of the present application, the term "protective coating" may particularly denote a substantially continuous coverage of at least part of a substrate, such as a (wind turbine) blade substrate, capable of protecting the subjacent substrate from at least some of environmental influences or impacts, such as airborne particles and water rain. To this end, the protective coating may be directly provided on the substrate to be covered. It is however also possible to arrange one or more intermediate layers or elements which may have various functions, such as improving the adherence of the protective coating to the substrate.

In the context of the present application, the term "thermoset polymer", which may also be referred to as "thermostetting polymer", "thermoset resin", "duromer" or simply "thermoset", may particularly denote a polymer that is irreversibly hardened by curing from soft solid or viscous liquid prepolymers or resins. Curing may be induced by heat or suitable radiation and may be promoted by high pressure or mixing with a catalyst. It results in chemical reactions that may create extensive cross-linking between polymer chains to produce an infusible and insoluble polymer network. Once hardened, a thermoset can typically not be melted for reshaping, in contrast to thermoplastic polymers.

In an embodiment, the thermoset polymer is selected from the group consisting of polyurethane, polyester (such as an unsaturated polyester resin), epoxy resin, polyether and vinyl ester resin. These materials have proven particularly suitable for a protective coating to be used for a wind turbine blade.

In an embodiment, the thermoset polymer is contained in an amount of from 50 to 99.5 wt.-%, in particular from 55 to 99 wt.-%, in particular from 60 to 95 wt.-%, such as from 70 to 90 wt.-%, based on the total weight of the protective coating. Hereby, a mechanically robust polymer network may be obtained.

In an embodiment, the polymer precursor may comprise at least one of a monomer and an oligomer. In particular, the polymer precursor may comprise a polymerizable monomer and/or a polymerizable oligomer. The polymer precursor may undergo a polymerization reaction to yield the thermoset polymer. In addition, the polymer precursor comprises a first functional group capable of reacting with a (second) functional group of a fibrous macromolecule. Suitable examples for the first functional group include an isocyanate group, a carbon-carbon double bond and/or an epoxy (oxirane) group.

In an exemplary embodiment, the first functional group may not only be capable of reacting with a (second) functional group of a fibrous macromolecule, but may also be suitable to cause a polymerization of the polymer precursor. Thus, a part of the first functional group may react with a (second) functional group of a fibrous macromolecule to form a chemical bond (such as a covalent bond) and another part of the first functional group may react with another polymer precursor molecule to yield a (thermoset) polymer.

In another (alternative) exemplary embodiment, the polymer precursor may comprise two or more different types of functional groups, among them one capable of reacting with a (second) functional group of a fibrous macromolecule and another one capable of undergoing a polymerization reaction.

In an embodiment, the polymer precursor is contained in a composition that is used for reacting with the fibrous macromolecule and/or for polymerization in an amount of from 50 to 99.5 wt.-%, in particular from 55 to 99 wt.-%, in particular from 60 to 95 wt.-%, such as from 70 to 90 wt.-%.

In an embodiment, two or more polymer precursors may be used. Among them, at least one polymer precursor may be capable of reacting with the fibrous macromolecule and with another prepolymer or polymer precursor.

In the context of the present application, the term "fibrous macromolecule" may particularly denote an organic substance that is significantly longer than it is wide. Preferably, the fibrous macromolecule as used in the present invention is flexible or elastically deformable.

In an embodiment, the fibrous macromolecule is selected from the group consisting of cellulose fiber, aramid fiber, nylon fiber, polyester fiber and acrylic fiber. These materials have proven particularly suitable for a protective coating to be used for a wind turbine blade.

In an embodiment, the fibrous macromolecule is contained in an amount of from 0.5 to 15 wt.-%, in particular from 0.7 to 12 wt.-%, in particular from 1 to 10 wt.-%, based on the total weight of the protective coating or in a composition that is used for reacting with the polymer precursor.

In an embodiment, the fibrous macromolecule has an average fiber length of less than 1 mm, in particular of from 0.1 to 0.9 mm, such as from 0.2 to 0.8 mm.

In an embodiment, at least part of the fibrous macromolecule is bonded to at least part of the thermoset polymer via (by means of) chemical bonds (in case of an already formed protective coating) or the fibrous macromolecule comprises a second functional group capable of reacting with the first functional group of the polymer precursor (in case of a yet to be formed protective coating). A suitable example for the second functional group includes a hydroxy group or any other group capable of reacting with the first functional group, depending on the type of the first functional group.

In the context of the present application, the term "chemical bonds" may in particular denote strong bonds, such as covalent and/or ionic bonds. Preferably, the chemical bonds are covalent bonds, which are very resistant to cleavage and may provide particularly efficient erosion-avoiding properties to the protective coating.

In an embodiment, the protective coating further comprises an adjuvant additive. In the context of the present application, the term "adjuvant additive" may in particular denote a catalyst or any other adjuvant that allows to control or promote a polymerization reaction and/or a reaction between the first and second functional groups. A suitable example for the adjuvant additive includes an organic peroxide, which may for instance catalyze the polymerization reaction of an unsaturated polyester. Depending on the type of polymer precursor, an adjuvant additive may also be dispensable.

In an embodiment, the adjuvant additive is contained in an amount of from 0.01 to 5 wt.-%, in particular from 0.05 to 4 wt.-%, in particular from 0.1 to 2 wt.-%, based on the total weight of the protective coating or in a composition that is used for reacting the polymer precursor with the fibrous macromolecule.

In an embodiment, the protective coating further comprises a surfactant (i.e. a surface-active agent). Preferably, the surfactant is contained in the protective coating in a manner (e.g. type, amount, etc.) such that a surface energy of the protective coating is in the range of from 20 to 35 mN/m (or 20 to 35 mJ/m²). By controlling the surface energy of the protective coating within this range, the adhesion force of fouling to the surface may be efficiently reduced, which is particularly beneficial for avoiding the deposition of material on the wind turbine blade. Suitable examples for the surfactant include anionic surfactants, cationic surfactants, nonionic surfactants and/or ampholytic surfactants, as conventionally used for solvent based paints.

In an embodiment, the surfactant is contained in an amount of from 0.01 to 2 wt.-%, in particular from 0.05 to 1.5 wt.-%, in particular from 0.1 to 1 wt.-%, based on the total weight of the protective coating or in a composition that is used for reacting the polymer precursor with the fibrous macromolecule.

In an embodiment, the protective coating further comprises a biocidal additive. In the context of the present application, the term "biocidal additive", which may also be referred to as "biocide", may in particular denote a compound or mixture of compounds having an inhibitory (or antagonistic) effect on the growth of microorganisms, that is, compounds that are capable of at least reducing the growth rate (e.g. bacteriostatic agents with respect to controlling the growth of bacteria) and/or compounds that cause toxic effects (e.g. bactericide agents with respect to killing bacteria). The biocidal additive may in particular comprise at least one of a fungicide, an algaecide and/or a bactericide. By taking this measure, the growth and colonization of microorganisms on a wind turbine blade may be prevented, which is particularly beneficial for avoiding the deposition of material on the wind turbine blade. Suitable examples for the biocidal additive include zinc pyrithione, isothiazolinone biocides (such as butylbenzisothiazolinone (BBIT), methylisothiazolinone (MIT) or benzisothiazolinone (BIT)), carbamate biocides (such as iodopropynyl butyl carbamate (IPBC), phenylurea biocides (such as 3-(3,4-Dichlorophenyl)-1,1-dimethylurea (DCMU, Diuron)) or combinations thereof.

In an embodiment, the biocidal additive is contained in an amount of from 0.01 to 2 wt.-%, in particular from 0.05 to 1.5 wt.-%, in particular from 0.1 to 1 wt.-%, based on the total weight of the protective coating or in a composition that is used for reacting the polymer precursor with the fibrous macromolecule.

In an embodiment, the protective coating further comprises a photocatalytic additive. In the context of the present application, the term "photocatalytic additive" may in particular denote a compound or mixture of compounds having photocatalytic properties, such as catalytic properties induced by irradiation with light (in particular when irradiated with light having an energy higher than the band gap of the photocatalytic additive). By taking this measure, organic material on the surface may be decomposed, which is particularly beneficial for avoiding the deposition of material on the wind turbine blade or for removing already deposited material from the surface of the wind turbine blade.

The photocatalytic additive may in particular comprise an inorganic compound, in particular an inorganic oxide. Suitable examples for the photocatalytic additive include titanium dioxide and/or zinc oxide. The particles of photocatalytic additive may be surface-treated, which may avoid a photocatalytic degradation of the coating by the photocatalytic additive and/or which may facilitate a homogenous distribution of the photocatalytic additive within the coating. The photocatalytic additive may have an average particle size (average particle diameter) of from 5 nm to 10 µm, in particular of from 10 to 1000 nm. The determination of an average particle size or an average particle diameter is known to a person skilled in the art and can be performed for instance by visual microscopic observation with an appropriate magnification, for instance by using the dynamic light scattering method and/or laser diffraction method, depending on the particle size range.

In an embodiment, the photocatalytic additive is contained in an amount of from 0.01 to 10 wt.-%, in particular from 0.05 to 7.5 wt.-%, in particular from 0.1 to 5 wt.-%, based on the total weight of the protective coating or in a composition that is used for reacting the polymer precursor with the fibrous macromolecule.

In an embodiment, the protective coating comprises at least one, in particular at least two or even all three, of a surfactant, a biocidal additive and a photocatalytic additive. A combination of these additives may synergistically prevent the deposition of material (such as fouling, in particular bio-fouling) on a surface of a wind turbine blade.

In an embodiment, the protective coating may comprise further additives, such as a processing aid and/or a stabilizer, as the case may be. A processing aid may in particular improve the processing, such as the applying, of the protective coating. A stabilizer may improve the durability and/or the lifetime of the protective coating.

In an embodiment, the protective coating has a (low) porosity of for instance less than 5 % or even less than 1 %, such that water may not be absorbed by the coating. Hereby, disadvantages by water absorption, such as an increase in weight of the wind turbine blade, a risk of breakage induced by icing or a promotion of the growth of microorganisms, may be avoided. In the context of the present application, the term "porosity" may in particular denote the ratio of the volume of voids to the total volume. The porosity can be determined by conventional porosimetric methods known to a person skilled in the art, for instance by water saturation method or mercury intrusion porosimetry method.

In a still further aspect, a method of producing a protective coating suitable for a wind turbine blade comprises a step of providing a composition comprising a polymer precursor (such as a monomer and/or an oligomer) having a first functional group and a fibrous macromolecule having a second functional group (capable of reacting with the first functional group), and a step of reacting the first functional group of the polymer precursor with the second functional group of the fibrous macromolecule, such that chemical bonds (in particular covalent bonds) between the first and the second functional groups are formed (generated).

In an embodiment, the composition may further comprise at least one of another prepolymer or polymer precursor, an adjuvant additive, a surfactant, a biocidal additive, a photocatalytic additive, a processing aid and/or a stabilizer, as set forth in further detail above,

In an embodiment, the composition comprises 50 to 99.5 wt.-% (in particular from 55 to 99 wt.-%, in particular from 60 to 95 wt.-%, such as from 70 to 90 wt.-%) of the polymer precursor, 0.5 to 15 wt.-% (in particular from 0.7 to 12 wt.-%, in particular from 1 to 10 wt.-%) of the fibrous macromolecule, and optionally at least one of the group consisting of another prepolymer or polymer precursor, an adjuvant additive (in particular a catalyst), a surfactant, a biocidal additive, a photocatalytic additive, a processing aid and a stabilizer.

In an embodiment, the composition may further comprise a solvent, such as an organic solvent and/or water, which may be capable of at least partly dissolving and/or (homogenously) dispersing the ingredients of the composition.

In an embodiment, the step of reacting the first functional group of the polymer precursor with the second functional group of the fibrous macromolecule may include a heating and/or irradiation of the composition such that chemical bonds (in particular covalent bonds) between the first and the second functional groups are generated, as will be readily apparent to a person skilled in the art.

In a yet further aspect, a wind turbine blade comprises a blade substrate and a protective coating (as an external layer on at least part of the blade substrate, such as applied as a paint) as set forth herein and/or as obtained by a method of producing a protective coating as set forth herein.

In an embodiment, the protective coating covers at least part of the blade substrate, but may also cover the entire surface of blade substrate. In particular, the protective coating may be provided as an external layer (i.e. in contact with the environment). The protective layer may be applied directly onto the blade substrate or onto one or more intermediate layers, such as a primer layer or undercoat. The protective layer may be applied by any conventional technique customary to a person skilled in the art, such as by casting, dispensing, spreading, spray coating, dip coating, curtain coating, roll coating, printing, or the like, without the necessity of any complex processing equipment. In particular, the protective layer may be applied as a paint.

In an embodiment, the blade substrate comprises a glass fiber reinforced polymer composite.

The invention or the embodiments of the invention described in this document can be descriptively summarized as follows:
The modification of the aerodynamic behavior of the wind turbine blade may result in a significant decrease in the performance of a wind turbine. The present invention seeks to avoid this modification by the combination of several mechanisms: On the one hand, an increased resistance to erosion by airborne solid particles or water rain, and on the other, reducing the accumulation of organic materials on the surface. These characteristics may be achieved with an external protective layer applied on the blade substrate.

The erosion resistance may be provided by the chemical structure of the coating based on a combination of a thermoset polymer and flexible fibrous macromolecules. The macromolecules may be selected so as to be able to form chemical bonds with the precursor resin of the thermostable polymer. The polymerization of the thermoset resin in the presence of the dispersed macromolecules may produce a kind of copolymer structure where both materials are interlocked at a microscopic scale.

The antifouling behavior (such as the prevention of material deposition) of the coating may be provided by one or several measures or a combination thereof. The first measure is based on the control of the surface tension of the coating in the 20-35 mN/m range. Lower and higher surface tension values favor higher biological fouling retention. This can be regulated with the incorporation of surfactant additives to the coating composition previously to the polymerization process. The second measure is based on the incorporation of active biocide additives responsible for preventing the growth of microorganisms. These additives, which may be fungicide, algaecide and/or bactericide may be incorporated in the coating composition previously to the polymerization process. The lixiviation of these additives may avoid the colonization of microorganisms on the coating surface. The third measure is based on the degradation of the organic material present on the surface by a photocatalytic reaction. Photocatalytic materials based on titanium dioxide or zinc oxide or combinations of both may be incorporated in the coating composition previously to the polymerization process and/or applied by spraying as concentrated suspension on the surface of the coating after the polymerization step has begun or even combined both. In order to avoid the photocatalytic degradation of the coating by these additives, the titanium dioxide and/or the zinc oxide can be treated superficially. The particle size of the photocatalytic material may be in the range of nanometers or even micrometers.

One or more of the following advantages may be achieved:
∘ The durability of the wind turbine blades may be increased, and the AEP ensured for longer time by maintaining the aerodynamic of the blade as long as possible, in particular by avoiding the degradation of the external coating by erosion and/or the deposition of a biological fouling on the blade surface.
∘ The protective layer as described herein may be applied as an external protective layer on the blade substrate made of glass fiber reinforced polymer composite. To improve the erosion resistance of the coating, the formulation of a kind of copolymer is proposed. This copolymer is obtained by the chemical reaction between thermoset resins and organic macromolecules introduced as short fibers. The compound organic matrix of the protective layer may improve erosion resistance with the advantage that it does not increase the weight of the blade as for a traditional coating. Another advantage of this solution compared with elastomeric solutions can be seen in the low porosity of the layer avoiding water absorption which could increase the weight of the blade or could induce breakage by icing or could even help the growth of microorganisms.
∘ To improve antifouling behavior, one or several mechanisms or a combination of them are described herein. Reducing the surface energy of the coating in the range 20-35 mN/m is one of the mechanism proposed. This interval of energies may reduce the fouling adhesion forces, allowing maximum fouling release. The second mechanism involves the introduction of a biocide compound in the coating in order to avoid the colonization by microorganisms. And finally, a degradation of the organic material may be achieved by a photocatalytic material introduced in the coating formulation. The advantage of combining different mechanisms may allow tackling the fouling problem in a broader way.
∘ The protective layer as described herein may be applied as a paint by different conventional application methods avoiding complex processing equipment. This advantage allows to use this solution to repair the damaged blades during maintenance operations.

## Claims

1. A protective coating suitable for a wind turbine blade, the protective coating comprising a thermoset polymer and a fibrous macromolecule, wherein at least part of the thermoset polymer is bonded to at least part of the fibrous macromolecule via chemical bonds.

2. The protective coating as set forth in claim 1, wherein the thermoset polymer is selected from the group consisting of polyurethane, polyester, epoxy resin, polyether and vinyl ester resin.

3. The protective coating as set forth in any one of the preceding claims, wherein the thermoset polymer is contained in an amount of from 50 to 99.5 wt.-% based on the total weight of the protective coating.

4. A protective coating suitable for a wind turbine blade, the protective coating being obtainable by a reaction between
- a polymer precursor having a first functional group, and
- a fibrous macromolecule having a second functional group,
such that chemical bonds between the first and the second functional groups are formed.

5. The protective coating as set forth in claim 4, wherein the first functional group is selected from the group consisting of an iscyanate group, a carbon-carbon double bond and an epoxy group.

6. The protective coating as set forth in any one of the preceding claims, wherein the fibrous macromolecule is selected from the group consisting of cellulose fiber, aramid fiber, nylon fiber, polyester fiber and acrylic fiber.

7. The protective coating as set forth in any one of the preceding claims, wherein the fibrous macromolecule has an average fiber length of less than 1 mm and/or wherein the fibrous macromolecule is contained in an amount of from 0.5 to 15 wt.-% based on the total weight of the protective coating.

8. The protective coating as set forth in any one of the preceding claims, further comprising an adjuvant additive, in particular in an amount of 0.01 to 5 wt.-% based on the total weight of the protective coating.

9. The protective coating as set forth in any one of the preceding claims, further comprising a surfactant, in particular in an amount of 0.01 to 2 wt.-% based on the total weight of the protective coating.

10. The protective coating as set forth in any one of the preceding claims, further comprising a biocidal additive, in particular in an amount of 0.01 to 2 wt.-% based on the total weight of the protective coating.

11. The protective coating as set forth in any one of the preceding claims, further comprising a photocatalytic additive, in particular in an amount of 0.01 to 10 wt.-% based on the total weight of the protective coating.

12. A method of producing a protective coating suitable for a wind turbine blade, the method comprising:
providing a composition comprising a polymer precursor having a first functional group and a fibrous macromolecule having a second functional group,
reacting the first functional group of the polymer precursor with the second functional group of the fibrous macromolecule, such that chemical bonds between the first and the second functional groups are formed.

13. The method as set forth in claim 12, wherein the composition comprises 50 to 99.5 wt.-% of the polymer precursor, 0.5 to 15 wt.-% of the fibrous macromolecule, and optionally at least one of the group consisting of another prepolymer or polymer precursor, an adjuvant additive, a surfactant, a biocidal additive, a photocatalytic additive, a processing aid and a stabilizer.

14. A wind turbine blade comprising a blade substrate and a protective coating as set forth in any one of claims 1 to 11 and/or as obtained by a method as set forth in any one of claims 12 to 13.

15. The wind turbine blade, wherein the blade substrate comprises a glass fiber reinforced polymer composite.
